# EUROPEAN PATENT SPECIFICATION

(11) **EP 1 554 703 B1**
(45) Date of publication and mention of the grant of the patent: **18.07.2007**
(21) Application number: 03808826.6
(22) Date of filing: 08.10.2003
(51) Int. Cl.: G08B 13/14

(54) **WIRELESS SECURITY BEACON FOR CONSUMER EQUIPMENT**
DRAHTLOSE SICHERHEITSBAKE FÜR VERBRAUCHERGERÄTE
BALISE DE SECURITE SANS FIL POUR EQUIPEMENT CLIENT

(30) Priority: 15.10.2002 GB 0223955
(43) Date of publication of application: 20.07.2005
(73) Proprietor: Koninklijke Philips Electronics N.V., 5621 BA Eindhoven (NL)
(72) Inventor: Marshall, Christopher B., Redhill, Surrey RH1 5HA (GB); Champsaur, Marc H. J., Redhill, Surrey RH1 5HA (GB); Harlashkin, Igor A., Redhill, Surrey RH1 5HA (GB); Rimmington, Andrew K., Redhill, Surrey RH1 5HA (GB); Walbrou, Pascal R. M., Redhill, Surrey RH1 5HA (GB)
(74) Representative: Damen, Daniel Martijn
(86) International application number: PCT/IB2003/004424
(87) International publication number: WO 2004/036520

(56) References cited:
- WO-A-00/17021
- US-A- 5 021 779
- US-A- 5 748 084
- US-A- 6 087 937
- US-A- 6 104 281

## Description

### FIELD OF THE INVENTION

The invention relates to security systems for consumer equipment, to corresponding methods and software, to consumer equipment having such systems, to methods of detecting stolen equipment, and to methods of operating a service of tracing ownership of recovered consumer equipment.

### BACKGROUND

It is known from European patent application 0,852,367 (Siemens) to provide an anti-theft system for electrical goods e.g. video recorders, by periodically transmitting identification numbers to a controller via the mains electricity supply. If the controller does not receive a particular identification number for a predetermined time, it assumes the item is stolen and raises an alarm. United States patent 5,963,131 shows theft protection systems for portable electrical items such as lap top computers. A motion detector and/or proximity detector detects the theft and triggers an audible alarm.

U.S.patent 6,150,923 (Johnson , et al.) provides an anti-theft system for example for a car radio, domestic electrical items, or electrical office items such as computers, video recorders, televisions or the like which locks the device off when theft is detected. Such detection involves detecting disconnection from its power supply, or when a movement detector such as a tilt detector is triggered. An audio alarm signal can also be provided, supplied by its own on board battery. In the case of the car radio, when the device is re-connected and switched on, a security code must be entered to enable the radio to operate. If the system is incorporated into a mobile phone, the alarm may include sending a message to a predetermined location. If the system is incorporated into a component of a computer, the alarm may include displaying a message on the screen of, or disabling the operation of any computer that the component is subsequently used in. A disadvantage of all these types of anti-theft system, is that while the equipment is not connected, it is not immediately obvious whether it has been stolen, once the audio alarm has exhausted its battery.

It is also known to provide electronic tags attached to consumer equipment to deter theft. As shown in US patent 6,317, 028 (Valiulis), such tags can be coupled to control electronics of the equipment to disable the equipment unless the tag receives a predetermined security code. The tag enables the security code to be received regularly by a short range RF interface or by mains power supply signaling system, from a central controller elsewhere in the consumer premises. Again there is nothing to help indicate the goods have been stolen, once the alarm is exhausted.

It is also known to provide a theft deterrent system for shop displays using tags attached to the products which if tampered with, cause the product and perhaps the thief, to be marked with an indelible dye. Although this is effective in making it obvious that the goods have been stolen, it is not removable, and not suitable for deterring theft from consumers premises for obvious reasons. It is also known to provide tracker systems for indicating the whereabouts of stolen cars. In this case a small radio transmitter is hidden in the car, capable of communicating with a nationwide radio network. It is normally not connected to the network, and is switched on and connected to the network only when triggered by the user reporting the theft and the identity of the car.

It is also known from EP 1170969 to have a mobile handset for a cellular network arranged to send SMS (short message service) messages to a specified number when the handset has been stolen, to indicate where the handset is, to aid recovery. This relies on the phone first receiving a"stolen" control message from the owner.

It is also known from US5021779 to provide an appliance which checks a security code and is designed to disable the appliance if a wrong code is received. Another design broadcasts a tracking signal but does not disable the appliance if a wrong code is received.

It is known from US5748084 to provide a laptop security beacon which can be activated if the computer is stolen, to recover or destroy important data or disable the computer.

### SUMMARY OF THE INVENTION

It is an object of the invention to provide improved apparatus or methods, addressing such problems. According to a first aspect of the invention, there is provided a security system for consumer equipment, the system having: a lock for preventing use of the equipment, and a remote key transmitter for a consumer to locate elsewhere in the consumer premises, the lock having a receiver for receiving a key signal from the remote key transmitter, the lock being arranged to periodically check the key is valid, and if so, enable the use of the equipment, if no valid key is detected the lock is arranged to prompt an equipment user for a reset code, the lock further being arranged, upon entry of a correct reset code by the equipment user within a given time limit, to make an entry in an audit log, enable the use of the equipment, and await a further periodic key check, the system also having: a wireless transmitter for the equipment for broadcasting a beacon signal indicating stolen status, if the lock does not receive one of a valid key and a valid reset code within the given time limit.

The beacon signal can help police to recover stolen goods, and makes mere possession of stolen goods more risky for the thief or for dealers in stolen goods (fences). If the thief believes the equipment could have such a beacon, they could be deterred from carrying out the theft at all. The lock serves to make the equipment useless or very expensive to make useful, and hence can reduce or destroy the sale value to the thief and to the fence. The inventors have realised that these measures can be combined to great effect, and notably that the measures need little or no change of behaviour by users, and so are much more likely to become widely used, and be effective. At least for a radio transmitted key, it is relatively easy to have a single key for many pieces of equipment, which again can make it much easier for the owner to use. The term consumer equipment is intended to encompass any equipment which is sufficiently portable to be susceptible to theft, including computer equipment, household appliances, household electronics, and similar equipment used by organisations including schools, hospitals and businesses for example. Enabling the use of the equipment can include for example enabling use for a predetermined period of time, or for a number of operations before re-validation is required.

An additional feature of some embodiments is the receiver being a wireless receiver and being integrated together with the wireless transmitter.

This dual use of a single unit is based on a recognition that the two functions are complementary as they operate at different times and so need not conflict. The dual use can help keep the component count low and reduce manufacturing costs. There are also advantages if the beacon has a receive function. This means it can have a snooze state, with periodic listening for radio activity. If an interrogating (police) radio is heard, then it can wake up and transmit its alarm beacon. A disadvantage is that it takes longer to be detected, as the device is asleep for long periods. However, as reception takes less energy than transmission this mode of operation can enable operation for a much longer period. Furthermore, as the beacon function can listen, it can engage in dialogue with an interrogating (police) radio. Such dialogue can include declaring its identity, or information such as a post-code. To needlessly transmit this with every alarm broadcast would use excessive energy.

An additional feature of some embodiments is the security system incorporating an identifier which is traceable to an owner of the equipment.

This can help allow the police to trace the owner of stolen goods, which can increase the chances of a successful conviction of the thief or fence. Notably as this type of identifier is internal, it does not affect the appearance of the equipment, can minimise actions or effort from the owner, and is difficult for the thief to remove or alter

An additional feature of some embodiments is an identifier communication means being incorporated with the lock, for use with authorised readers.

By incorporating it with the lock, this is again a dual use, based on a recognition that the two functions are complementary, and operate at different times, and so need not conflict. Again, the dual use can help to keep the component count low and reduce manufacturing costs. The identifier can be readable on interrogation, or readable by being broadcast periodically by wireless.

An additional feature of some embodiments is the identifier being broadcast by the wireless transmitter.

This is a dual use of the transmitter, and is based on a recognition that the two uses are compatible and need not conflict. Again the dual use can help to keep the component count low and reduce manufacturing costs. The identifier can be transmitted in response to interrogation by an authorised reader, or can be broadcast periodically.

An additional feature of some embodiments is the security system having a tamper detector for detecting tampering with the system, and for preventing use of the equipment if tampering is detected.

This can make it more difficult, expensive or impossible for a thief or fence to counter the security measures, and so reduce the value of the goods to the thief or fence.

An additional feature of some embodiments is an internal battery power supply for the wireless transmitter.

This can enable the beacon signal to be transmitted even when the equipment power supply is disconnected.

An additional feature of some embodiments is transmitting the beacon signal intermittently.

This can help increase the longevity of the beacon signal.

An additional feature of some embodiments is the identifier being encrypted.

An additional feature of some embodiments is the lock being arranged to check for a valid secure key when the equipment is switched on.

An additional feature of some embodiments is checking for a valid secure key periodically.

An additional feature of some embodiments is the wireless transmitter comprising an RF tag.

An additional feature of some embodiments is the wireless transmitter being arranged to send an SMS message.

An additional feature of some embodiments is a theft detector for triggering the broadcasting of the beacon signal.

An alternative or addition is to have it triggerable by an external command.

An additional feature of some embodiments is a warning for indicating that the equipment is protected by a beacon signal transmitter, or that tampering will result in disabling of the equipment.

This can be any type of warning including a label on or near the equipment and can add value by acting as a deterrent. Deterrence is important, in the case of car radio theft for example, the cost of damage to the car may be much greater than the cost of the radio.

An advantage of incorporating the identifier code in the lock is that it can be secured more easily against alteration by a thief or fence, and can be supplied as a subsystem to the equipment manufacturer, together with the key. This can reduce the value of stolen goods and increase the anti theft deterrent, whether or not a beacon is included as well. As an additional feature an identifier communication means is incorporated with the lock, which can give corresponding benefits of increased functionality but without additional components or manufacturing costs. Also it can be relatively easy for an owner to use compared to prior alternatives such as those which require entry of a PIN at switch on, or labelling with invisible ink. Another aspect of the invention provides consumer equipment having an equipment controller, and having the security system of any preceding claim, the controller being arranged to cooperate with the lock of the security system and to operate depending on the lock.

An additional feature of some embodiments is a remote key unit for sending the key to the security system.

An additional feature of some embodiments is the controller being arranged to exchange encrypted information with the security system periodically, and continue operating depending on whether a valid response is received from the security system.

An additional feature of some embodiments is the equipment being one of computer equipment, games equipment, audio, video or communications equipment, in car equipment, household appliances, and school, hospital, or business equipment.

Features can be in the form of software for running on conventional firmware or hardware such as microprocessors, digital signal processors, application specific integrated circuits and so on. Any of the additional features can be combined together or with any of the aspects of the invention, as would be apparent to those skilled in the art. Other advantages may be apparent to those skilled in the art, especially over other prior art not known to the inventors.

### BRIEF DESCRIPTION OF THE DRAWINGS

Embodiments of the invention will now be described by way of example, and with reference to the accompanying drawings, in which:
Fig 1 shows an embodiment of the invention with the lock and wireless transmitter being integrated,
Fig 2 shows another embodiment with the wireless transmitter separated from the lock,
Fig 3 shows consumer equipment according to an embodiment of the invention,
Fig 4 shows in schematic form some of the functions of an embodiment of the invention,
Fig 5 shows another embodiment, having a lock with an embedded identifier,
Fig 6 shows another embodiment, having a lock with tamper detection, and
Fig 7 shows a chain of those parties affected by embodiments.

### DETAILED DESCRIPTION

In at least some of the embodiments described, consumer equipment has an enhanced radio lock to prevent unauthorised use, and indicate a stolen status. This indication can be activated and maintained even if the equipment is switched off or disconnected from its normal power supply. The stolen status is made apparent in one or more ways, to potential buyers, and to the police so that the equipment is harder to sell and riskier to possess. The status is indicated by RF transmissions which can be detected by monitoring equipment which could be used by police or private security service agencies.

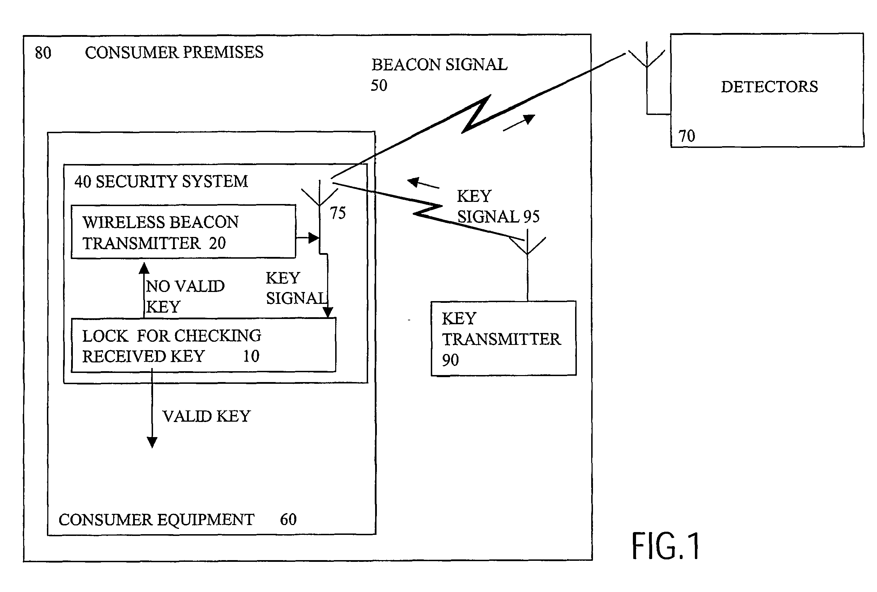

Figure 1 shows an overview including an anti theft security system 40 in consumer equipment 60. Although illustrated as a separate item, the system may optionally be incorporated in existing hardware in the consumer equipment. The consumer equipment can be household, business or in-car equipment for example. It can be anything portable and valuable enough to be worth stealing, including computers, computer accessories, games consoles, audio or video equipment, modules, discs or cartridges having software or any valuable content for example. Examples of in car equipment include radios, CD players, navigation systems, traffic information systems, television or video players or games players, for example. Consumer premises 80 can be a house, office, retail premises, school, hospital, vehicle, and so on. The system includes a lock 10 for receiving and checking a key sent by a remote key transmitter 90. The key transmitter is typically located elsewhere in the consumer premises, so that it is unlikely to be stolen at the same time as the equipment. It can be small enough to be carried on a key ring of an owner or user, or security staff for example. It can be used for validating many pieces of equipment, if convenient. The key could be any form of secure information including biometric identifiers of a genuine owner for example.

The system also has a wireless transmitter 20 for sending a beacon signal indicating a stolen status, via antenna 75. The stolen status can be determined if there is no valid key received within a predetermined time period, or by a combination of this and other circumstances, such as disconnection from a power supply or other network, or detection of motion, as appropriate to the type of consumer equipment. The transmitter can be a dedicated transmitter, or be used for other purposes. It can be an RF transmitter, using well known standards for short range transmission, e.g. less than 100m, such as Bluetooth, ZigBee, or cellular phone standards such as GSM, to enable use of SMS. Another alternative is to use optical frequencies such as infra red, though this is more suitable for the key than the beacon signal, as it is easier for a thief to block it. It can be active or passive, in the sense of being arranged to transmit only when interrogated, or passive in the sense of using the received signal to power the response transmission. To increase the anti theft deterrence, the lock and transmitter and optionally other parts are preferably made resistant to tampering. This can be achieved by having a back up battery, by monitoring that the battery back up is not disconnected, and monitoring that the transmitter is still functioning. The display and the RF transmitter can be monitored by checking impedance and current consumption for example, or by measuring light or RF output respectively, for example.

Fig 1 also shows interactions with the environment outside the consumer equipment, such as police or security agency detectors 70 checking for the RF emissions showing the stolen status to locate stolen goods. These may be located and used anywhere, including at sales locations for second hand equipment, at transport hubs such as ports, airports, road junctions and so on. Radio direction finding equipment could be used to locate the goods more accurately. Cameras could be used to record number plates of vehicles passing with stolen goods for example. To make the beacon signal last as long as possible, to save battery power, it can be sent intermittently or only when movement is detected for example, or only when an interrogation signal is detected. The transmitter can be a passive RF tag which requires no power supply, but which can receive an RF signal and use some of the received power to broadcast a weak response signal. This will lengthen the period of time the stolen equipment is "hot", and therefore less valuable to the thief.

Not shown, for the sake of clarity, is an external authorised resetting service which may be useful for resetting the indication once the stolen goods are returned to their owner, or in the case of loss of or faults with the key transmitter. The service sends a resetting key to the equipment once it is satisfied the goods are not stolen. The lock can verify the resetting key matches an embedded key before enabling operation of the equipment. Alternatively or as well, the secure reset process can be carried out with a matching key 30 provided by the consumer from elsewhere on the consumer premises. This can be a PIN (personal identification number) remembered and entered manually by the consumer, or sent automatically from a household security controller over mains signalling or RF, for example.

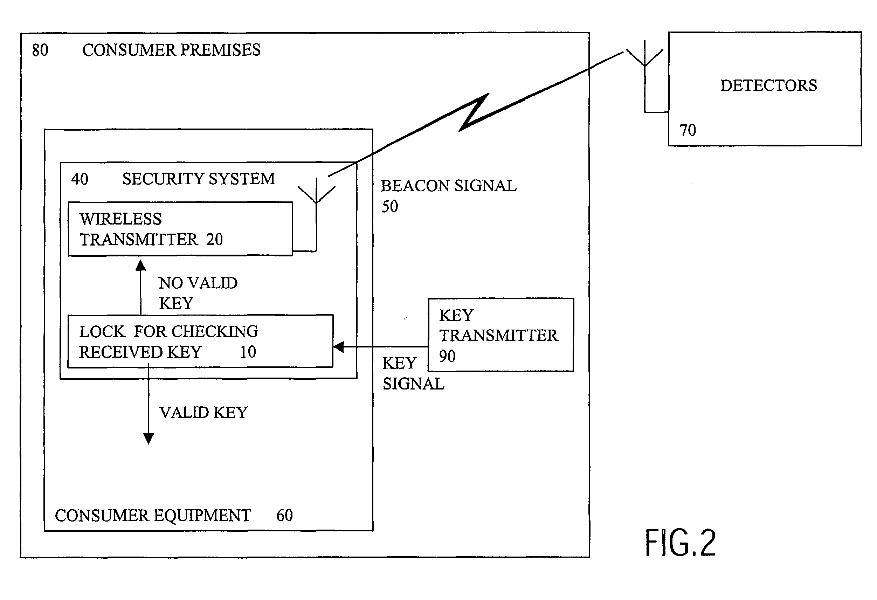

Figure 2 shows another embodiment. Corresponding reference numerals to those of figure 1 have been used where possible. In this case, the key is received by the lock over a separate path to that used by the wireless beacon signal. The path for the key could be a mains power line signalling path, or a different radio path for example. This may be more convenient for some types of consumer equipment, or for compatibility with other equipment. In an alternative embodiment, the code used in the key is actually stored elsewhere, not in the key transceiver. If the key transceiver is connected to a network, a phone line, or the internet, it can obtain from a remote server a key sequence to transmit to the lock. A first advantage of this is that this means that the key will not be stolen, if the key transceiver is stolen, as it doesn't contain the information needed to transmit the correct key signal. A second advantage is that the key can be provided by a second organisation, to enable the equipment. In a further alternative embodiment, the key transceiver is dispensed with, and the key is sent from the remote server directly to the equipment. An example is a set top box, for decoding satellite or cable or other television transmissions, which is enabled by a key signal sent by the broadcast television operator in return for a subscription. In this case, no key transceiver is needed. A beacon transmitter is incorporated in the set top box, which can be activated to assist in the recovery of the set top box, in the event of theft (or discontinuance of the subscription).

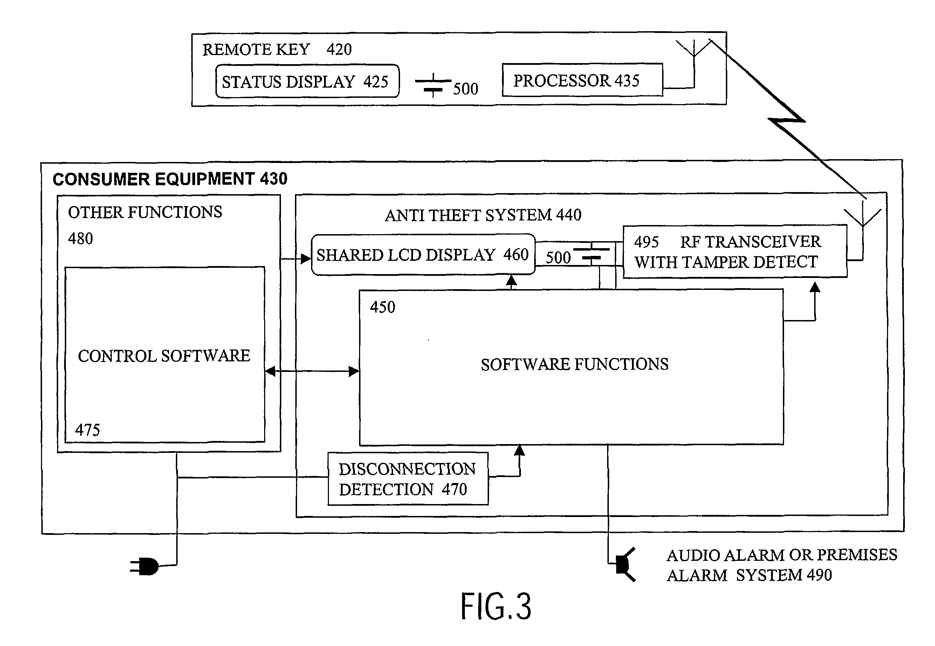

Figure 3 shows a more detailed view of an embodiment, showing some of the principal hardware elements. An anti theft security system 440 protects consumer equipment 430. These can be implementations of the features 40 and 60 of figures 1 or 2, or otherwise. The system has software functions 450, and optionally a low power display such as an LCD, for displaying status. This may be a dual use of an equipment display. Other functions 480 of the equipment may use the display. These other functions include control software 475 for disabling the equipment unless encrypted exchanges with the anti theft system are valid. Any of these software functions can be run on conventional hardware such as microprocessors or application specific circuitry. Separate circuitry can be used for the secure functions, or the same processor can be used for all the functions, for example. The anti theft security system also has a back up battery 500, a disconnection detector 470, and a connection to an external audio alarm 490, which may be a household or premises or car alarm for example. The system also has an RF transceiver 495, including RF circuitry, tamper detection circuitry and an antenna. Optionally this can be an RF tag, either passive or active. The disconnection detection is optionally for the purpose of deciding when theft has occurred, and triggering of the key validation process. It can optionally be carried out directly by the microprocessor or be detected by other functions 480 of the equipment. It can be arranged to detect disconnection from a mains power supply, or in the case of car equipment, from the 12 volt supply from the car battery, or disconnection from the car aerial for example.

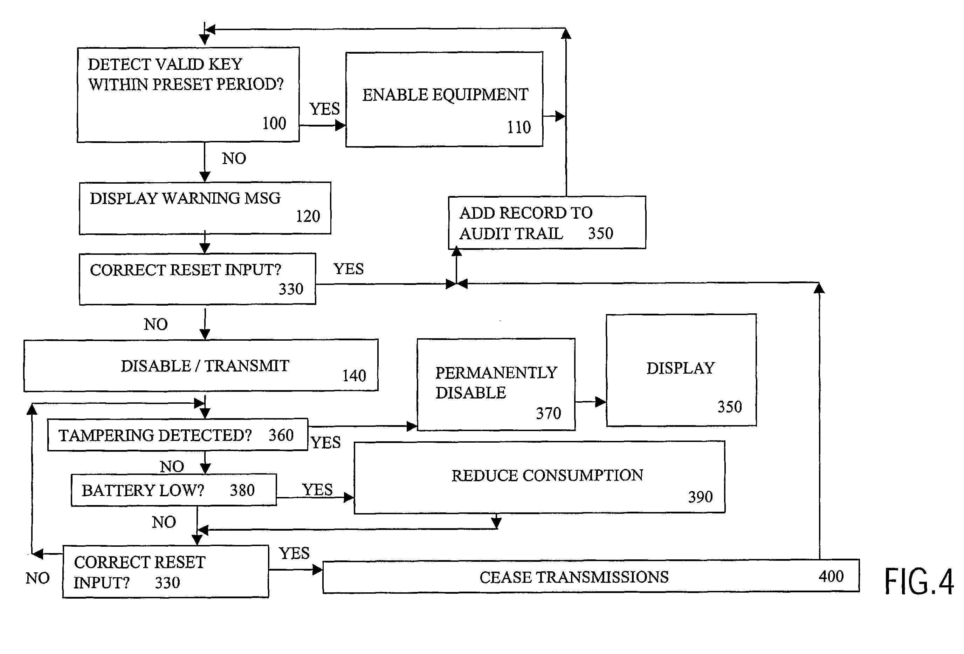

The microprocessor can be a conventional general purpose processor or a module of an application specific integrated circuit for example. It is arranged to run software for a number of functions including the lock, the beacon transmitter and the key receiver, some of which are explained in more detail below with reference to figure 4. It is arranged to receive an RF key signal, with an identifier, and check the key and the identifier, to check they match with an embedded key and identifier. It is also arranged to decide theft status, transmit an RF beacon signal, and undertake encrypted exchanges with an equipment control part 475. Other functions of the microprocessor include storing the embedded identifier, releasing it to authorized requesters, by displaying it or transmitting it in an RF signal for example. The microprocessor is also arranged for driving the display, battery monitoring, and tamper detection. The tamper detection can take the form of monitoring connectivity with external parts such as the rest of the equipment, the radio transceiver, and the antenna. The voltage, current or impedance of the connections can be monitored, continuously or periodically. A second antenna could be used to ensure the first antenna is transmitting successfully, and has not been tampered by removal or short circuiting for example. Tamper detection immediately causes the microprocessor to alert the equipment control software, or cease responding to it.

The system 440 can be constructed in the form of a display module, with back up battery, microprocessor and RF transmitter built in. The module can accept inputs from the other functions of the equipment to enable the display to be used for normal operating messages, either to drive part of the display directly, or via the microprocessor.

The key transceiver 420 in this case has a display 425 which could be a small LED or Alphanumeric LCD display, for indicating a status of the equipment, that it is in range and acknowledging the key transmissions for example. It could have an audio indicator if convenient, to alert the owner or user of a change in status. It has its own battery power supply 500, and a microprocessor 435 for running software to store the identifier, transmit the key incorporating the identifier, and control any encryption and exchange of information with the anti theft system. In principle the key transceiver can be a one way transmitter with no receive function, but in practice there are advantages to having an exchange of information between the key and lock, to acknowledge receipt and enable the key to be changed or updated to make it more secure.

Figure 4 shows an example of functional steps of an embodiment of an anti theft system, such as that of fig 1. This may be embodied in software using a conventional language, running on the microprocessor of figure 3, or elsewhere. At step 100, if a valid key is detected within a predetermined time, a non stolen status is decided and normal operation of the equipment is enabled at step 110, by means of regular encrypted messages to the control software of the equipment. This decision is optionally supported by other factors indicating theft, such as unexpected disconnection or movement. If a stolen status is determined, at step 320 optionally a message is displayed to warn a genuine user that theft has been detected. This message may warn of the consequences and prompt the user for a reset code. At step 330, if the correct reset code is entered within a given time limit, then no action is taken other than making a record in the audit log at step 350, and the process returns to step 100 to await another detection. The code can be in any form including biometric identifiers of a genuine owner for example. The predetermined time period can be set to suit the type of equipment. For equipment such as cameras which might be used away from the home, the period might be a day or more, so that the key transmitter can be left at home. For other less portable equipment, the period might be shorter, even minutes, to allow time for a reset input. A different, shorter period can be allowed before an alarm is triggered.

If no correct reset is received, at step 140, the equipment is disabled temporarily, and the beacon signal is transmitted. The radio transceiver can optionally be arranged to continue transmitting independently of the microprocessor, in case the microprocessor is disconnected or disabled. The indication can include an identifier in the form of information such as post code information to enable the owner to be traced, or coded information which the maker or retailer can relate to the owner or owner's address. It could indicate the value or type of the equipment, to aid police or other agencies to prioritise recovery efforts. This identifier can be output in a number of ways, including as part of the indication, or only when interrogated by an authorised system or person, to save battery power. Where the indication is a display, the identifier could be displayed in response to key presses. Where the indication is an RF signal, an authorised RF detector could request further information. The equipment could enter a dialogue with the detector and send the identifier and other information on request to the detector.

Next a loop with three main actions is undertaken repeatedly at steps 360, 380, and 330, for which the order is not critical. At step 360, a check for tampering is carried out, as described above. (Of course this can be carried out continuously.) If tampering is detected, at 370, the equipment is permanently disabled, for example by deleting software, or ceasing to respond to requests from the equipment to enable it to operate. Preferably there should be a clear warning somewhere on the equipment of the consequence of tampering: At step 350, an indication of the permanent disabling is shown, and/or transmitted, and a corresponding record added to the audit log.

At step 380, a check on the level of the back up battery is carried out. If low, at step 390, consumption is reduced by displaying or transmitting intermittently, or only when movement is detected, or when the equipment detects inspection or interrogation in any form. At step 330, the system checks for a correct reset input. If no, the stolen status remains and the system repeats steps 360, 380 and 330. If yes, the indication of stolen status ceases, and after making an appropriate entry in the audit log, the system returns to step 300 to await another detection. The audit log can be stored in secure non volatile memory with appropriate safeguards to prevent unauthorised access or tampering, following established implementation methods.

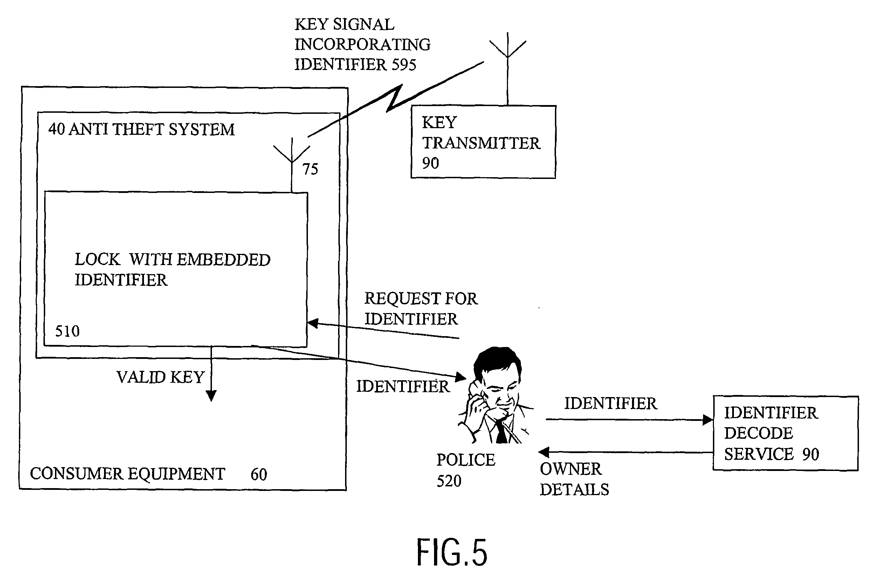

Figure 5 shows another embodiment. Corresponding reference numerals to those of figure 1 have been used where possible. In this case, no beacon signal is transmitted. The lock 510 has an embedded identifier which is traceable to the owner. To enable normal operation of the equipment, the key received from the key transmitter is checked as described above. In this case, the identifier is contained in the key signal, and checked. The key on its own may be unique, and so can be secure for the purpose of preventing unauthorised use. Also, it can be used to verify ownership if the owner has been found. However without the identifier, the key does not help trace the owner. The identifier can be an encrypted version of a postcode, or can be traced by reference to a mapping held by police or a third party such as a service organisation. The identifier can be entered once at the time of setting up the equipment, or repeatedly updated by an exchange of information with the key transmitter.

In figure 5 the lock stores the identifier in a tamper proof non volatile memory, and makes it available to authorised requesters. This could require a password or any sort of code, or be openly available. If the goods are suspected of being stolen, the police 520 could retrieve the identifier from the goods and trace the owner by contacting the service agency 90 who would decode the identifier and return the owners contact details. This could be carried out by a telephone call, or other immediate 2-way communication.

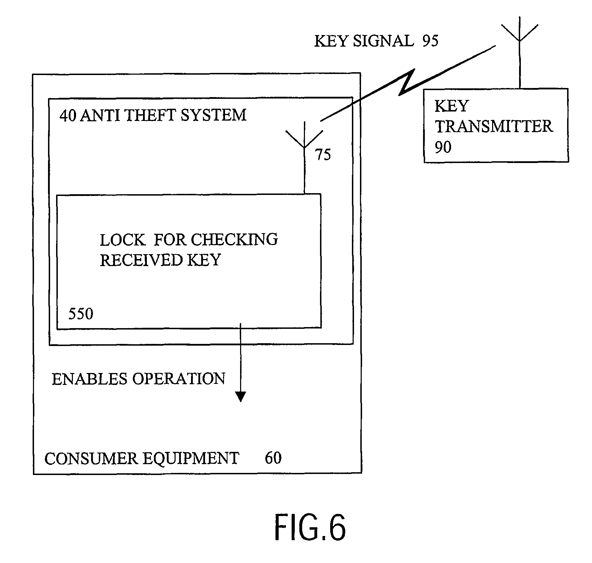

Figure 6 shows another embodiment. Corresponding reference numerals to those of figure 1 have been used where possible. In this embodiment, the lock 550 has tamper proofing measures, but does not necessarily have a beacon or identifier. As before, the key is checked by the lock and if valid, and if no tampering is detected, then the lock enables operation of the equipment. The lock detects tampering with the RF antenna or associated circuitry, or tampering with the coupling to the equipment control. In the event of tampering, the equipment control is commanded to permanently disable the equipment, by deleting software for example.

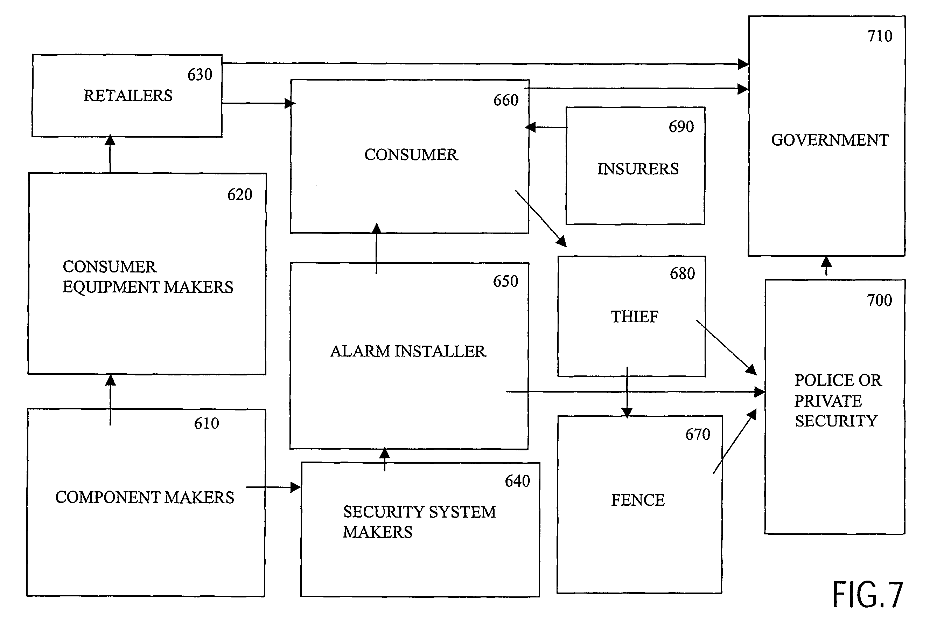

Figure 7 shows a graphical representation of a chain of parties involved in some types of consumer equipment, to show the wide impact of the embodiments and of anti theft measures generally. Component makers 610 can benefit from added value components, from running associated services, and from improved brand image. Such makers feed consumer equipment makers 620, who can see similar benefits, and benefits from product differentiation. They feed retailers 630, who could benefit from greater sales and reduced theft from their premises. The consumer 660 clearly benefits from reduced theft, with consequences such as reduced insurance costs and improved sense of security. Also feeding the consumer are insurance companies 690, and alarm installers 650. The latter could see a larger market for related products and services, and fewer costs from false alarms. Corresponding benefits can arise for security system makers 640, supplying the installers.

Clearly the potential thieves 680 suffer from increased risk of capture, and greatly reduced value of stolen goods if they show they are stolen, and are disabled. The "fence" or receiver 670 who buys the stolen goods also suffers from the higher risk of capture, greater difficulty in "cleaning" the goods to try to remove evidence that it is stolen. All this can lead to benefits to the police or private security firms 700, of reduced false alarms, higher detection rates, and reduced crime. As government 710 is ultimately responsible, it benefits from improved policing results, and from reduced tax and duty evasion from trade in stolen goods, and from more votes from a more contented electorate.

Concluding remarks: Other variations will be apparent to those skilled in the art, within the scope of the claims. As has been described above, a security system for consumer equipment has a lock for preventing use of the equipment, and broadcasts a beacon signal indicating stolen status, if the lock does not receive a valid key signal over a wireless link. The beacon signal can help police identify stolen goods, and makes mere possession of stolen goods more risky and so deters theft. The lock serves to make the equipment useless or very expensive to make useful, once stolen. Little or no change of behaviour by users is needed. The beacon can be passive, in snooze state to save power, with periodic listening for an interrogating (police) radio, which causes it to wake up and transmit. The system can securely store, and optionally broadcast, a secure identifier which is traceable to an owner of the equipment, to aid recovery and conviction. Tamper resisting measures can be included.

## Claims

1. A security system (40) for consumer equipment (60), the system having: a lock (10) for preventing use of the equipment, and a remote key transmitter for a consumer to locate elsewhere in the consumer premises, the lock having a receiver for receiving a key signal from the remote key transmitter (90), the lock being arranged to periodically check the key is valid, and if so, enable the use of the equipment, if no valid key is detected the lock is arranged to prompt an equipment user for a reset code, the lock further being arranged, upon entry of a correct reset code by the equipment user within a given time limit, to make an entry in an audit log, enable the use of the equipment, and await a further periodic key check, the system also having: a wireless transmitter (20) for the equipment for broadcasting a beacon signal indicating stolen status, if the lock does not receive one of a valid key and a valid reset code within the given time limit.

2. The security system of claim 1, wherein the reset code comprises a biometric identifier of an owner.

3. The security system of claim 1, the receiver being a wireless receiver and being integrated together with the wireless transmitter.

4. The security system of claim 1 or 3, incorporating an identifier which is traceable to an owner of the equipment.

5. The security system of claim 4, having an identifier communication means incorporated in the lock for use with authorised readers.

6. The security system of claim 4, the identifier being broadcast by the wireless transmitter.

7. The security system of any preceding claim, having a tamper detector (360,550) for detecting tampering with the system, and for preventing use of the equipment if tampering is detected.

8. The security system of any preceding claim, arranged to transmit the beacon signal intermittently.

9. The security system of claim 3 or any claim depending on claim 3, the identifier being encrypted.

10. The security system of any preceding claim, the lock being arranged to check for a valid secure key when the equipment is switched on.

11. The security system of any preceding claim, being arranged to check for a valid secure key periodically.

12. The security system of any preceding claim, the wireless transmitter comprising an RF tag.

13. The security system of any preceding claim, the wireless transmitter being arranged to send an SMS message.

14. The security system of any preceding claim, having a theft detector (450) for triggering the broadcasting of the beacon signal.

15. The security system of any preceding claim, having a warning for indicating that the equipment is protected by a beacon signal transmitter or that tampering will result in disabling of the equipment.

16. Consumer equipment (60) having an equipment controller (475), and having the security system of any preceding claim, the controller being arranged to cooperate with the lock of the security system and to operate depending on the lock.

17. The equipment of claim 16, the controller being arranged to exchange encrypted information with the security system periodically, and continue operating depending on whether a valid response is received from the security system.

18. The equipment of any of claims 16 or 17, being one of computer equipment, games equipment, audio, video or communications equipment, in car equipment, household appliances, and school, hospital, or business equipment.

## Patentansprüche

1. Sicherheitssystem (40) für Verbrauchergeräte (60), wobei das System die nachfolgenden Elemente umfasst:
- eine Sperre (10) um Verwendung des Geräts zu vermeiden, und einen Fernschlüsselsender, den ein Verbraucher anderswo in den Räumen des Verbrauchers unterbringen kann, wobei die Sperre einen Empfänger hat zum Empfangen eines Schlüsselsignals von dem Fernschlüsselsender (90), wobei die Sperre dazu vorgesehen ist, periodisch zu überprüfen, ob der Schlüssel noch gültig ist, und wenn ja, die Verwendung des Geräts zu ermöglichen, wenn kein gültiger Schlüssel detektiert wird, ist die Sperre dazu vorgesehen, den Verbraucher eines Geräts aufzufordern, einen Rückstellcode einzugeben, wobei die Sperre weiterhin dazu vorgesehen ist, bei Eingabe eines einwandfreien Rückstellcodes durch den Verbraucher des Geräts innerhalb einer bestimmten Zeitspanne, eine Eingabe in eine Revisionsaufzeichnung zu machen, was die Verwendung des Geräts ermöglicht, und auf eine weitere periodische Schlüsselkontrolle zu warten , wobei das System weiterhin die nachfolgenden Elemente umfasst: einen drahtlosen Sender (20) für das Gerät zum Senden eines Bakensignals, das einen gestohlenen Zustand angibt, wenn die Sperre innerhalb der gegebenen Zeitspanne nicht einen gültigen Schlüssel oder einen gültigen Rückstellcode empfängt.

2. Sicherheitssystem nach Anspruch 1, wobei der Rückstellcode einen biometrischen Identifizierer eines Inhabers umfasst.

3. Sicherheitssystem nach Anspruch 1, wobei der Empfänger ein drahtloser Empfänger ist und zusammen mit dem drahtlosen Sender integriert ist.

4. Sicherheitssystem nach Anspruch 1 oder 3, das einen Identifizierer umfasst der von einem Inhaber des Geräts verfolgbar ist.

5. Sicherheitssystem nach Anspruch 4, mit einem Identifiziererkommunikationsmittel, vorgesehen in der Sperre zur Verwendung durch autorisierte Leser.

6. Sicherheitssystem nach Anspruch 4, wobei der Identifizierer von dem drahtlosen Sender ausgesendet wird.

7. Sicherheitssystem nach einem der vorstehenden Ansprüche, mit einem Fälschungsdetektor (360, 550) zum Detektieren einer Fälschung des Systems und zur Vermeidung der Verwendung des Geräts, wenn Fälschung detektiert wird.

8. Sicherheitssystem nach einem der vorstehenden Ansprüche, vorgesehen zum intermittierenden Übertragen des Bakensignals.

9. Sicherheitssystem nach Anspruch 3 oder einem von Anspruch 3 abhängigen Anspruch, wobei der Identifizierer verschlüsselt ist.

10. Sicherheitssystem nach einem der vorstehenden Ansprüche, wobei die Sperre dazu vorgesehen ist, einen gültigen Sicherheitsschlüssel zu überprüfen, wenn das Gerät eingeschaltet wird.

11. Sicherheitssystem nach einem der vorstehenden Ansprüche, vorgesehen um einen gültigen Sicherheitsschlüssel periodisch zu überprüfen.

12. Sicherheitssystem nach einem der vorstehenden Ansprüche, wobei der drahtlose Sender eine HF-Marke aufweist.

13. Sicherheitssystem nach einem der vorstehenden Ansprüche, wobei der drahtlose Sender dazu vorgesehen ist, eine SMS-Nachricht auszusenden.

14. Sicherheitssystem nach einem der vorstehenden Ansprüche, mit einem Diebstahldetektor (450) zur Auslösung der Aussendung des Bakensignals.

15. Sicherheitssystem nach einem der vorstehenden Ansprüche, mit einer Warnung um anzugeben, dass das Gerät mit Hilfe eines Bakensignalsenders geschützt ist oder dass Fälschung zu Außerstandsetzung des Geräts führt.

16. Verbrauchergerät (60) mit einem Gerätcontroller (475) und mit dem Sicherheitssystem nach einem der vorstehenden Ansprüche, wobei der Controller dazu vorgesehne ist, mit der Sperre des Sicherheitssystems zusammenzuarbeiten und abhängig von der Sperre zu funktionieren.

17. Gerät nach Anspruch 16, wobei der Controller dazu vorgesehen ist, mit dem Sicherheitssystem periodisch verschlüsselte Information auszutauschen und den Betrieb fortzusetzen, und zwar abhängig davon, ob eine gültige Reaktion von dem Sicherungssystem empfangen wird.

18. Gerät nach einem der Ansprüche 16 oder 17, wobei das Gerät ein Computergerät, ein Spielgerät, ein Audio- ,Video- oder Kommunikationsgerät, ein Autogerät, ein Haushaltgerät, ein Schulen-, Krankenhaus- oder Geschäftsgerät ist.

## Revendications

1. Système de sécurité (40) pour équipement client (60), le système comportant: un verrouillage (10) pour empêcher l'utilisation de l'équipement, et un émetteur de clé à distance pour un client à localiser ailleurs dans les locaux du client, le verrouillage comportant un récepteur pour recevoir un signal de clé de l'émetteur de clé à distance (90), le verrouillage étant à même de vérifier périodiquement si la clé est valide et, si c'est le cas, de permettre l'utilisation de l'équipement, et, si aucune clé valide n'est détectée, le verrouillage est à même d'inciter un utilisateur de l'équipement à demander un code de réinitialisation, le verrouillage étant en outre à même, lors de l'entrée d'un code de réinitialisation correct par l'utilisateur de l'équipement, dans la limite d'un laps de temps donné, d'effectuer une entrée dans un journal d'audit, de permettre l'utilisation de l'équipement, et d'attendre une autre vérification de clé périodique, le système comportant également: un émetteur sans fil (20) pour l'équipement destiné à diffuser un signal de balise indiquant l'état volé, si le verrouillage ne reçoit pas, dans la limite du laps de temps donné, une clé valide ou un code de réinitialisation valide.

2. Système de sécurité suivant la revendication 1, dans lequel le code de réinitialisation comprend un identificateur biométrique d'un propriétaire.

3. Système de sécurité suivant la revendication 1, le récepteur étant un récepteur sans fil et étant intégré conjointement avec l'émetteur sans fil.

4. Système de sécurité suivant la revendication 1 ou 3, comprenant un identificateur qui permet de remonter à un propriétaire de l'équipement.

5. Système de sécurité suivant la revendication 4, comportant un moyen de communication d'identificateur incorporé dans le verrouillage pour être utilisé avec des lecteurs autorisés.

6. Système de sécurité suivant la revendication 4, l'identificateur étant diffusé par l'émetteur sans fil.

7. Système de sécurité suivant l'une quelconque des revendications précédentes, comportant un détecteur de fraude (360, 350) pour détecter des fraudes avec le système, et pour empêcher l'utilisation de l'équipement si une fraude est détectée.

8. Système de sécurité suivant l'une quelconque des revendications précédentes, agencé pour émettre le signal de balise par intermittence.

9. Système de sécurité suivant la revendication 3 ou l'une quelconque des revendications dépendant de la revendication 3, l'identificateur étant crypté.

10. Système de sécurité suivant l'une quelconque des revendications précédentes, le verrouillage étant agencé pour vérifier la présence d'une clé de sécurisation valide lorsque l'équipement est sous tension.

11. Système de sécurité suivant l'une quelconque des revendications précédentes, agencé pour vérifier une clé de sécurisation valide périodiquement.

12. Système de sécurité suivant l'une quelconque des revendications précédentes, l'émetteur sans fil comprenant une étiquette RF.

13. Système de sécurité suivant l'une quelconque des revendications précédentes, l'émetteur sans fil étant destiné à envoyer un message SMS.

14. Système de sécurité suivant l'une quelconque des revendications précédentes, comportant un détecteur de vol (450) pour déclencher la diffusion du signal de balise.

15. Système de sécurité suivant l'une quelconque des revendications précédentes, comportant une avertissement pour indiquer que l'équipement est protégé par un émetteur de signal de balise ou que la fraude a pour effet de désactiver l'équipement.

16. Equipement client (60) comportant un contrôleur d'équipement (475) et comportant le système de sécurité suivant l'une quelconque des revendications précédentes, le contrôleur étant agencé pour coopérer avec le verrouillage du système de sécurité et pour fonctionner en fonction du verrouillage.

17. Equipement suivant la revendication 16, le contrôleur étant conçu pour échanger des informations cryptées avec le système de sécurité périodiquement, et pour continuer à fonctionner selon qu'une réponse valide est reçue du système de sécurité.

18. Equipement suivant l'une quelconque des revendications 16 ou 17, en l'occurrence un équipement d'ordinateur, un équipement de jeu, un équipement audio, un équipement vidéo ou un équipement de communication, dans un équipement de voiture, des appareils ménagers, et des équipements d'écoles, d'hôpitaux ou d'entreprises.
